# EUROPEAN PATENT APPLICATION

(11) **EP 3 498 496 A1**
(43) Date of publication of application: **19.06.2019**
(21) Application number: 17210810.2
(22) Date of filing: 28.12.2017
(51) Int. Cl.: B60C 11/03, B60C 11/12, B60C 11/11, B60C 11/13

(54) **SPECIAL TIRE TREAD PATTERN FOR ALL-WHEEL POSITIONS OF PASSENGER VEHICLE**

(30) Priority: 18.12.2017 CN 201711368552; 18.12.2017 CN 201721770804 U
(71) Applicant: Aeolus Tyre Co., Ltd., 454003 Jiaozuo Henan (CN)
(72) Inventor: Zhang, Zhaoying, Henan (CN); Fan, Junwei, Henan (CN); Li, Jie, Henan (CN); Yang, Zhimin, Henan (CN); Hu, Caodi, Henan (CN)
(74) Representative: Laufhütte, Dieter

(57) **Abstract**

The invention discloses a tread pattern for a special all-wheel tire of a passenger vehicle. A third pattern block (5) is located on a center line of a tread; second pattern grooves (3), second pattern blocks (4), first pattern grooves (2) and first pattern blocks (1) are arranged in a laterally symmetrical manner on both sides of the third pattern block (5); first knife slots (6) and second knife slots (7) are formed in the second pattern blocks (4) and the third pattern block (5); the first knife slots (6) and the second knife slots (7) in each of the second pattern blocks (4) are communicated with the first pattern groove (2) and the second pattern groove (3) on the two sides of the second pattern block (4); and the first knife slots (6) and the second knife slots (7) in the third pattern block (5) are communicated with the second pattern grooves (3) on the two sides of the third pattern block (5). In the utility model, the tread pattern for a special all-wheel tire of a passenger vehicle is designed and invented in view of the particularity of the urban passenger transport vehicles and the particularity of the use environment, different knife slot designs can provide the tire with special performance, and the wear resistance and the heat dissipation performance of the tire are improved and the noise of the tire is reduced via the knife slots, and meanwhile the wear resistance and the heat dissipation performance of the tire can also be improved by means of the structural design of the pattern.

## Description

### Technical Field

The invention belongs to the technical field of tread patterns, and specifically relates to a tread pattern for a special all-wheel tire of a passenger vehicle.

### Background Art

A pneumatic tire is provided with circumferential and radial pattern grooves and ground contact positions divided by the pattern grooves on its tread so as to form patterns satisfying the tire performance and the use conditions. With the development of the modern society, the refinement of road condition classification and the refinement of vehicle classification, different types of vehicles are gradually classified into categories each having a single use in a single use environment, and their specific uses and the requirements in laws and regulations on different vehicles in different environments by the country have great difference. Therefore, the tires of special vehicles are subject to higher requirements.

With the development of Chinese cities, the number of urban and suburban buses has been increasing year by year. However, due to the crisscrossing of urban streets, urban roads in some peninsula cities such as Qingdao of China and Seoul of South Korea have many curves, resulting in abrupt braking and turning of the urban buses are more than those of general vehicles, meanwhile the speeds of the suburban buses are very high, and now with the development of novel vehicles and new energy sources, a chassis of a passenger vehicle is becoming lower and lower at present, and the power is gradually transformed from the original gasoline into pure electric power. Therefore, the vehicles themselves have more heat than the previous passenger vehicles. Accordingly, the comprehensive requirements on noise, heat dissipation, wear resistance, absence of eccentric wear, low rolling resistance and the like of the tires are very high.

### Summary of the Invention

The objective of the invention is to provide a tread pattern for a special all-wheel tire of a passenger vehicle, in order to satisfy the requirements of low rolling resistance, fuel saving, low noise, low heat generation, good operation performance, stable traveling, high wet-skid resistance, eccentric wear resistance and stone discharge ability of urban and suburban passenger vehicles.

The objective of the invention is achieved in the following manner:
A tread pattern for a special all-wheel tire of a passenger vehicle includes first pattern blocks, second pattern blocks, a third pattern block, first pattern grooves and second pattern grooves, which are distributed along a circumferential direction; the third pattern block is located on a center line of a tread; the second pattern grooves, the second pattern blocks, the first pattern grooves and the first pattern blocks are arranged in a laterally symmetrical manner on both sides of the third pattern block; first knife slots and second knife slots are formed in the second pattern blocks and the third pattern block; the first knife slots and the second knife slots in each of the second pattern blocks are communicated with the first pattern groove and the second pattern groove on the two sides of the second pattern block; the first knife slots and the second knife slots in the third pattern block are communicated with the second pattern grooves on the two sides of the third pattern block; and the first pattern grooves and the second pattern grooves are in a circumferentially "zigzag" form.

The included angle α between two adjacent straight edges of the first pattern groove is 120-140°, and the included angle γ between the two adjacent straight edges of the second pattern groove is 120-140°.

The width of the first pattern block is 0.9-1.1 times that of the second pattern block, and the width of the second pattern block is 0.9-1.1 times that of the third pattern block.

The first pattern groove and the second pattern groove are pattern grooves having symmetrical angles, and the included angle β between a side face of each pattern groove and a vertical line of the tread is 15-25°.

The depth of the second knife slot is 1/6 of the depth of the first pattern groove.

The first knife slot includes a first knife slot I, a second knife slot II and a third knife slot III, one end of the second knife slot II is communicated with the first knife slot I, the other end of the second knife slot II is communicated with the third knife slot III, the included angle between the first knife slot I and the second knife slot II and the included angle between the second knife slot II and the third knife slot III are obtuse angles.

The first knife slot is prepared by a steel sheet, during forming of the tire, the steel sheet is embedded in the first knife slot, and after the tire is formed, the steel sheet is pulled out to form the first knife slot in the second pattern block and the third pattern block.

The steel sheet includes an ordinary steel sheet part I, a three-dimensional steel sheet part and an ordinary steel sheet part II, the ordinary steel sheet part I corresponds to the first knife slot I, the three-dimensional steel sheet part corresponds to the second knife slot II, the ordinary steel sheet part II corresponds to the third knife slot III, and a plurality of projections and grooves are formed in the three-dimensional steel sheet part; and a connecting part is arranged at the top of the steel sheet.

The steel sheet includes a three-dimensional steel sheet part I, a three-dimensional steel sheet part II and a three-dimensional steel sheet part III, the three-dimensional steel sheet part I corresponds to the first knife slot I, the three-dimensional steel sheet part II corresponds to the second knife slot II, the three-dimensional steel sheet part III corresponds to the third knife slot III, and a plurality of projections and grooves are formed in the three-dimensional steel sheet part I, the three-dimensional steel sheet part II and the three-dimensional steel sheet part III; and a connecting part is arranged at the top of the steel sheet.

Stone discharge structures are arranged in the first pattern grooves and the second pattern grooves.

The stone discharge structures are stone discharge platforms arranged in the first pattern grooves and the second pattern grooves.

A third knife slot is formed in the first pattern block, and the depth of the third knife slot does not exceed 1/3 of the depth of the first pattern block.

The first pattern blocks, the second pattern blocks and the third pattern block are pattern blocks with unequal distances.

Compared with the prior art, the tread pattern for a special all-wheel tire of a passenger vehicle in the invention is designed and invented in view of the particularity of the urban passenger vehicles and the particularity of the use environment, different knife slot designs can provide the tire with special performance, and the wear resistance and the heat dissipation performance of the tire are improved and the noise of the tire is reduced via the knife slots; with the design of the tread pattern, the tire can match specific use environments, special uses, road conditions and vehicle performance, and meanwhile the wear resistance and the heat dissipation performance of the tire can also be improved by means of the structural design of the pattern. During the use of the tire, a lot of heat is produced, the high temperature will affect the rubber wear resistance, and the wear resistance of the tire is improved by improving the design of the pattern.

In order that the tire can have better wear resistance during use at all-wheel positions to prevent malformed wear parts from being generated during the braking and turning, the first pattern blocks are arranged on the shoulder, and the first pattern blocks are circumferentially continuous pattern blocks, which can provide good wear performance; the second pattern blocks and the third pattern block are design into "8" shapes, with the first knife slots and the second knife slots formed in the pattern blocks to improve the heat dissipation performance of the tire, thereby enhancing durability of the tire; at the same time, the knife slots divide the large pattern blocks into small pattern blocks, thereby reducing the impact and vibration of the pattern blocks on the road surface, and effectively reducing the noise; as the first knife slot is prepared by the steel sheet, the rigidity between the pattern blocks can be improved, and the driving performance of the pattern blocks is improved; and the first pattern grooves and the second pattern grooves are in a circumferentially "zigzag" form, so that the drainage and stone discharge performance is good.

### Brief Description of the Drawings

Fig. 1 is a structural schematic diagram of the invention.
Fig. 2 is an enlarged view of a part A in Fig. 1.
Fig. 3 is a section view of a first pattern groove.
Fig. 4 is a section view of a second pattern groove.
Fig. 5 is a front view after a steel sheet is unfolded when a three-dimensional steel sheet is only located in the middle.
Fig. 6 is a top view after the steel sheet is unfolded when the three-dimensional steel sheet is only located in the middle.
Fig. 7 is a section view of an A-A direction in Fig. 5.
Fig. 8 is a section view of a B-B direction in Fig. 5.
Fig. 9 is a section view of a C-C direction in Fig. 5.
Fig. 10 is a front view after a steel sheet provided with uniformly arranged projections and grooves is unfolded when three parts are three-dimensional steel sheets.
Fig. 11 is a section view of an A-A direction in Fig. 10.
Fig. 12 is a section view of a B-B direction in Fig. 10.
Fig. 13 is a section view of a C-C direction in Fig. 10.
Fig. 14 is a front view after a steel sheet provided with non-uniformly arranged projections and grooves is unfolded when three parts are three-dimensional steel sheets.
Fig. 15 is a section view of an A-A direction in Fig. 14.
Fig. 16 is a section view of a B-B direction in Fig. 14.
Fig. 17 is a section view of a C-C direction in Fig. 14.
Fig. 18 is a section view of a second knife slot.
Fig. 19 is a structural schematic diagram of the invention with stone discharge structures and third knife slots.

Reference signs: 1-first pattern block; 2- first pattern groove; 3-second pattern groove; 4-second pattern block; 5-third pattern block; ; 6-first knife slot; 601-first knife slot I; 602-second knife slot II; 603-third knife slot III; 7-second knife slot; 8-steel sheet; 801-ordinary steel sheet part I; 802-three-dimensional steel sheet part; 803-ordinary steel sheet part II; 804-connecting part; 805-three-dimensional steel sheet part I; 806-three-dimensional steel sheet part II; 807-three-dimensional steel sheet part III; 9-stone discharge structure; 10-third knife slot.

### Detailed Description of the Embodiments

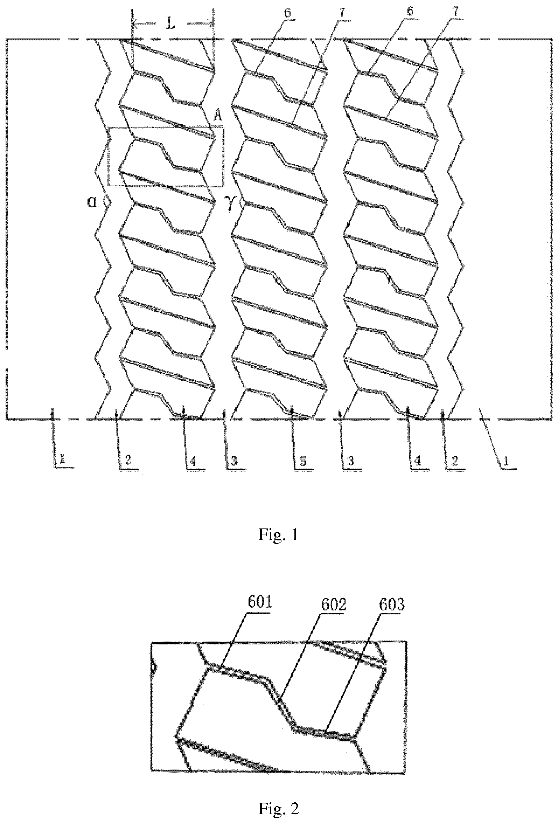

As shown in Figs. 1 to Fig. 4, a tread pattern for a special all-wheel tire of a passenger vehicle includes first pattern blocks 1, second pattern blocks 4, a third pattern block 5, first pattern grooves 2 and second pattern grooves 3, which are distributed along a circumferential direction, the third pattern block 5 is located on a center line of a tread, the second pattern grooves 3, the second pattern blocks 4, the first pattern grooves 2 and the first pattern blocks 1 are arranged in a laterally symmetrical manner on both sides of the third pattern block 5; first knife slots 6 and second knife slots 7 are formed in the second pattern blocks 4 and the third pattern block 5; the first knife slots 6 and the second knife slots 7 in each of the second pattern blocks 4 are communicated with the first pattern groove 2 and the second pattern groove 3 on the two sides of the second pattern block 4; the first knife slots 6 and the second knife slots 7 in the third pattern block 5 are communicated with the second pattern grooves 3 on the two sides of the third pattern block 5; and the first pattern groove 2 and the second pattern groove 3 are in a circumferentially "zigzag" form.

The included angle α between two adjacent straight edges of the first pattern groove 2 is 120-140°, and the included angle γ between the two adjacent straight edges of the second pattern groove 3 is 120-140°.

The width of the first pattern block 1 is 0.9-1.1 times that of the second pattern block 4, and the width of the second pattern block 4 is 0.9-1.1 times that of the third pattern block 5. The width of the pattern block in the invention refers to the width of the pattern block as generally meant in the art, that is, the vertical distance L between the two ends of the pattern block along the horizontal direction.

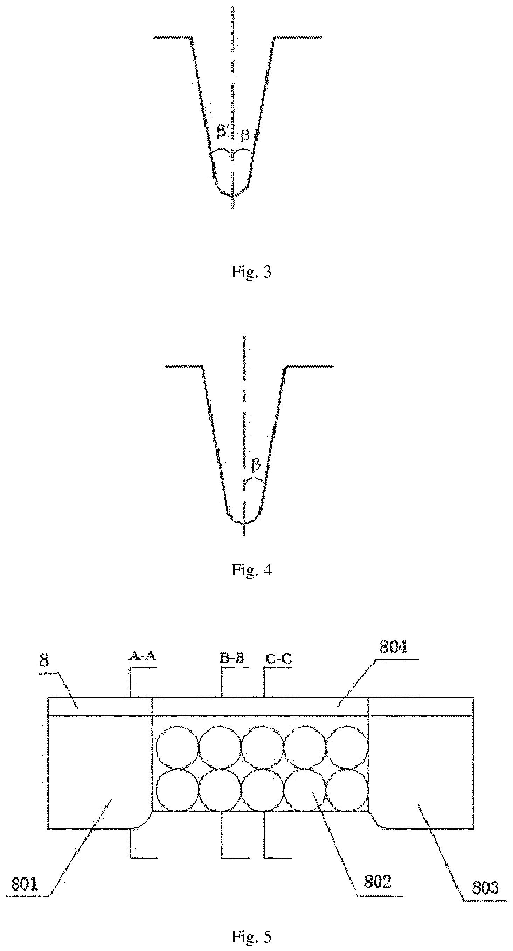

The first pattern grooves 2 and the second pattern grooves 3 are pattern grooves having symmetrical angles, and the included angle β between a side face of each pattern groove and a vertical line of the tread is 15-25° according to Fig.3, the symmetrical angles means that the angle β or β' between the vertical line to both side of the pattern groove is same.

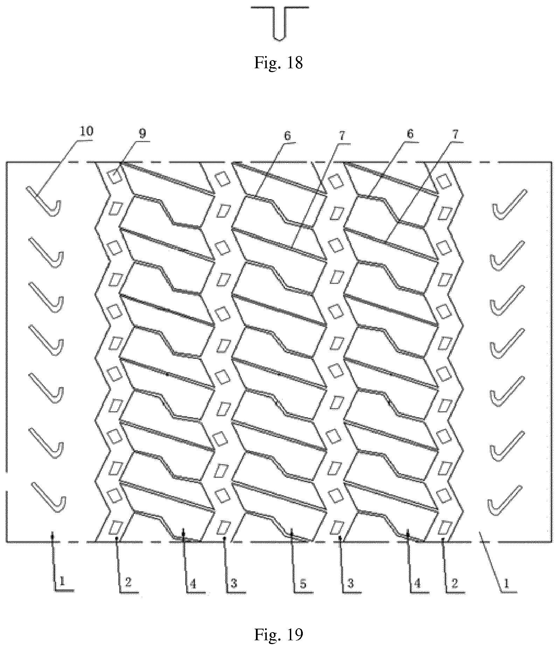

The depth of the second knife slot 7 is 1/6 of the depth of the first pattern groove 2, and the section view of the second knife slot 7 is as shown in Fig. 18.

The first knife slot 6 is Z-shaped, the first knife slot 6 includes a first knife slot I 601, a second knife slot II 602 and a third knife slot III 603, one end of the second knife slot II 602 is communicated with the first knife slot I 601, the other end of the second knife slot II 602 is communicated with the third knife slot III 603, the included angle between the first knife slot I 601 and the second knife slot II 602 and the included angle between the second knife slot II 602 and the third knife slot III 603 are obtuse angles.

The depths of the first knife slot I 601, the second knife slot II 602 and the third knife slot III 603 may be or may be not equal.

The first knife slot 6 is prepared by a steel sheet 8, during forming of the tire, the steel sheet 8 is embedded in the first knife slot 6, and after the tire is formed, the steel sheet 8 is pulled out to form the first knife slot 6 in the second pattern block 4 and the third pattern block 5.

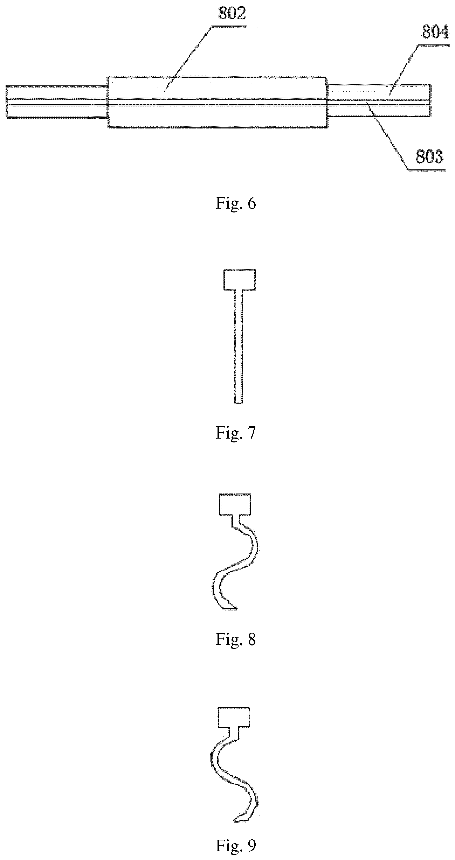

As shown in Figs. 5 to 9, the steel sheet 8 includes an ordinary steel sheet part I 801, a three-dimensional steel sheet part 802 and an ordinary steel sheet part II 803, the ordinary steel sheet part I 801 corresponds to the first knife slot I 601, the three-dimensional steel sheet part 802 corresponds to the second knife slot II 602, the ordinary steel sheet part II 803 corresponds to the third knife slot III 603, and a plurality of projections and grooves are formed in the three-dimensional steel sheet part 802; and a connecting part 804 is arranged at the top of the steel sheet 8.

The first knife slot I 601 and the third knife slot III 603 of the first knife slot 6 prepared by the steel sheet 8 are ordinary knife slots, the side wall of the ordinary knife slot is a smooth plane, the second knife slot II 602 is a three-dimensional knife slot, mutually corresponding projections and grooves are arranged on the side walls on both sides of the three-dimensional knife slot, and the projections and the grooves on the side walls of the three-dimensional knife slot correspond to the projections and the grooves on the three-dimensional steel sheet part 802.

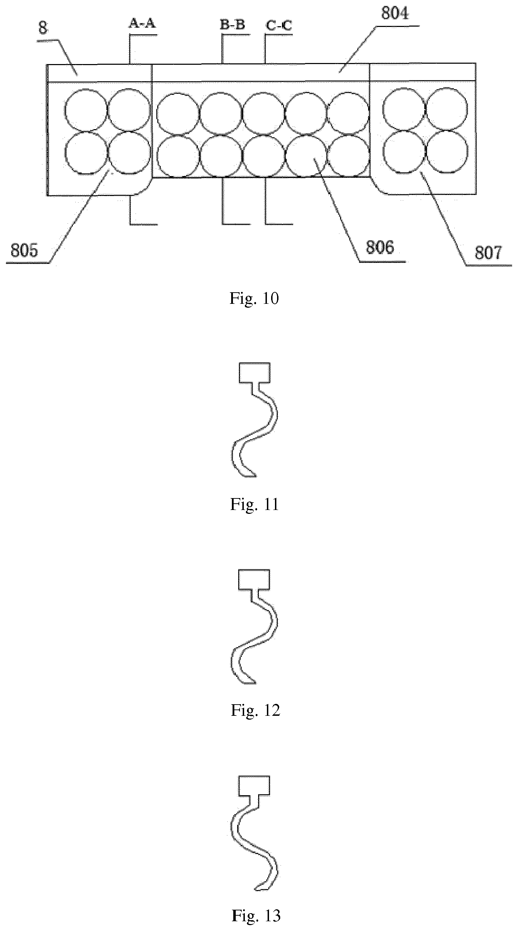

As shown in Figs. 10 to 13, the steel sheet 8 includes a three-dimensional steel sheet part I 805, a three-dimensional steel sheet part II 806 and a three-dimensional steel sheet part III 807, the three-dimensional steel sheet part I 805 corresponds to the first knife slot I 601, the three-dimensional steel sheet part II 806 corresponds to the second knife slot II 602, the three-dimensional steel sheet part III 807 corresponds to the third knife slot III 603, and a plurality of projections and grooves are formed in the three-dimensional steel sheet part I 805, the three-dimensional steel sheet part II 806 and the three-dimensional steel sheet part III 807; and a connecting part 804 is arranged at the top of the steel sheet 8.

Thefirst knife slot I 601, the second knife slot II 602 and the third knife slot III 603 of the first knife slot 6 prepared by the steel sheet 8 are three-dimensional knife slots, mutually corresponding projections and grooves are arranged on the side walls on both sides of the three-dimensional knife slots, the projections and the grooves on the side walls of the first knife slot I 601 correspond to the projections and the grooves on the three-dimensional steel sheet part I 805, the projections and the grooves on the side walls of the second knife slot II 602 correspond to the projections and the grooves on the three-dimensional steel sheet part II 806, and the projections and the grooves on the side walls of the third knife slot III 603 correspond to the projections and the grooves on the three-dimensional steel sheet part III 807.

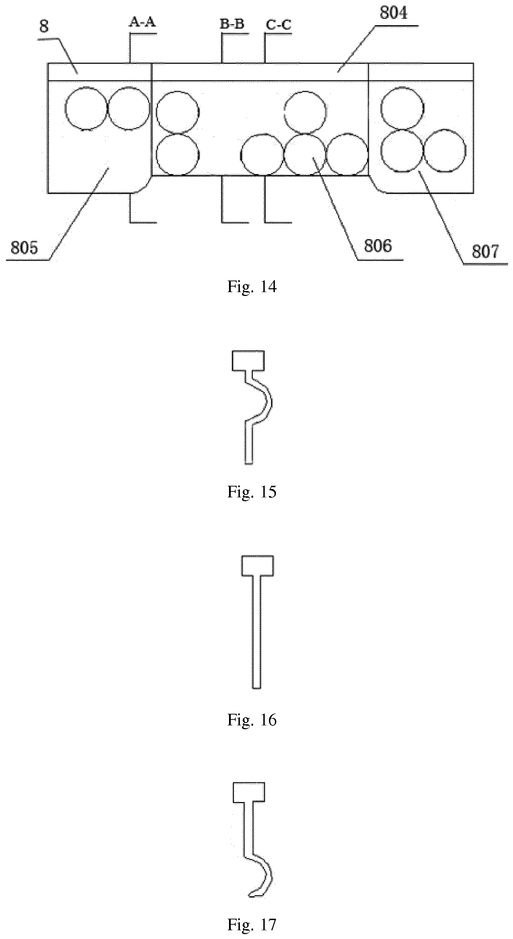

The projections and the grooves on three-dimensional steel sheet part 802,the three-dimensional steel sheet part I 805, the three-dimensional steel sheet part II 806 and the three-dimensional steel sheet part III 807 can be uniformly arranged as shown in Figs. 5 and 10, and can also be non-uniformly arranged as shown in Figs. 14 to 17.

Stone discharge structures 9 are arranged in the first pattern grooves 2 and the second pattern grooves 3.

The stone ejectors 9 are stone ejecting platforms arranged in the first pattern grooves 2 and the second pattern grooves 3, as shown in Fig. 19. The stone jectors 9 can reduce the stone fitting in the first pattern grooves 2 and the second pattern grooves 3, so it prevents it has the stone in the bottom center of the grooves.

Third knife slots 10 are formed in the first pattern blocks 1, and the depth of the third knife slot 10 does not exceed 1/3 of the depth of the first pattern block 2.

The first pattern blocks 1, the second pattern blocks 4 and the third pattern block 5 are pattern blocks with unequal distances.

Described above are merely preferred embodiments of the invention. It should be noted that those skilled in the art may make various changes and improvements without departing from the overall concept of the invention, and these should also be encompassed within the scope of protection of the invention.

## Claims

1. A tread pattern for a special all-wheel tire of a passenger vehicle, wherein the tread pattern comprises first pattern blocks (1), second pattern blocks (4), a third pattern block (5), first pattern grooves (2) and second pattern grooves (3), which are distributed along a circumferential direction; the third pattern block (5) is located on a center line of a tread; the second pattern grooves (3), the second pattern blocks (4), the first pattern grooves (2) and the first pattern blocks (1) are arranged in a laterally symmetrical manner on both sides of the third pattern block (5); first knife slots (6) and second knife slots (7) are formed in the second pattern blocks (4) and the third pattern block (5); the first knife slots (6) and the second knife slots (7) in each of the second pattern blocks (4) are communicated with the first pattern groove (2) and the second pattern groove (3) on the two sides of the second pattern block (4); the first knife slots (6) and the second knife slots (7) in the third pattern block (5) are communicated with the second pattern grooves (3) on the two sides of the third pattern block (5); and the first pattern grooves (2) and the second pattern grooves (3) are in a circumferentially "zigzag" form.

2. The tread pattern for a special all-wheel tire of a passenger vehicle of claim 1, wherein the included angle α between two adjacent straight edges of the first pattern groove (2) is 120-140°, and the included angle γ between the two adjacent straight edges of the second pattern groove (3) is 120-140°.

3. The tread pattern for a special all-wheel tire of a passenger vehicle of claim 1, wherein the width of the first pattern block (1) is 0.9-1.1 times that of the second pattern block (4), and the width of the second pattern block (4) is 0.9-1.1 times that of the third pattern block (5).

4. The tread pattern for a special all-wheel tire of a passenger vehicle of claim 1, wherein the first pattern groove (2) and the second pattern groove (3) are pattern grooves having symmetrical angles, and the included angle β between a side face of each pattern groove and a vertical line of the tread is 15-25°.

5. The tread pattern for a special all-wheel tire of a passenger vehicle of claim 1, wherein the depth of the second knife slot (7) is 1/6 of the depth of the first pattern groove (2).

6. The tread pattern for a special all-wheel tire of a passenger vehicle of claim 1, wherein the first knife slot (6) comprises a first knife slot I (601), a second knife slot II (602) and a third knife slot III (603), one end of the second knife slot II (602) is communicated with the first knife slot I (601), the other end of the second knife slot II (602) is communicated with the third knife slot III (603), the included angle between the first knife slot I (601) and the second knife slot II (602) and the included angle between the second knife slot II (602) and the third knife slot III (603) are obtuse angles.

7. The tread pattern for a special all-wheel tire of a passenger vehicle of claim 6, wherein the first knife slot (6) is prepared by a steel sheet (8), during forming of the tire, the steel sheet (8) is embedded in the first knife slot (6), and after the tire is formed, the steel sheet (8) is pulled out to form the first knife slot (6) in the second pattern block (4) and the third pattern block (5).

8. The tread pattern for a special all-wheel tire of a passenger vehicle of claim 7, wherein the steel sheet (8) comprises an ordinary steel sheet part I (801), a three-dimensional steel sheet part (802) and an ordinary steel sheet part II (803), the ordinary steel sheet part I (801) corresponds to the first knife slot I (601), the three-dimensional steel sheet part (802) corresponds to the second knife slot II (602), the ordinary steel sheet part II (803) corresponds to the third knife slot III (603), and a plurality of projections and grooves are formed in the three-dimensional steel sheet part (802); and a connecting part (804) is arranged at the top of the steel sheet (8).

9. The tread pattern for a special all-wheel tire of a passenger vehicle of claim 7, wherein the steel sheet (8) comprises a three-dimensional steel sheet part I (805), a three-dimensional steel sheet part II (806) and a three-dimensional steel sheet part III (807), the three-dimensional steel sheet part I (805) corresponds to the first knife slot I (601), the three-dimensional steel sheet part II (806) corresponds to the second knife slot II (602), the three-dimensional steel sheet part III (807) corresponds to the third knife slot III (603), and a plurality of projections and grooves are formed in the three-dimensional steel sheet part I (805), the three-dimensional steel sheet part II (806) and the three-dimensional steel sheet part III (807) respectively; and a connecting part (804) is arranged at the top of the steel sheet (8).

10. The tread pattern for a special all-wheel tire of a passenger vehicle of claim 1, wherein the stone ejectors are arranged in the first pattern grooves (2) and the second pattern grooves (3).

11. The tread pattern for a special all-wheel tire of a passenger vehicle of claim 10, wherein the stone ejectors (9) are stone ejecting platforms arranged in the first pattern grooves (2) and the second pattern grooves (3).

12. The tread pattern for a special all-wheel tire of a passenger vehicle of claim 1, wherein a third knife slot (10) is formed in the first pattern block (1), and the depth of the third knife slot (10) does not exceed 1/3 of the depth of the first pattern block (2).

13. The tread pattern for a special all-wheel tire of a passenger vehicle of claim 1, wherein the first pattern blocks (1), the second pattern blocks (4) and the third pattern block (5) are pattern blocks with unequal distances.
